Europäisches Patentamt

European Patent Office

Office européen des brevets

(11) Veröffentlichungsnummer: **0 251 047**
**A2**

(19)

(12) **EUROPÄISCHE PATENTANMELDUNG**

(21) Anmeldenummer: 87108754.0

(51) Int. Cl.⁴: **C08L 53/02**

(22) Anmeldetag: 19.06.87

(30) Priorität: 25.06.86 DE 3621219

(43) Veröffentlichungstag der Anmeldung:
07.01.88 Patentblatt 88/01

(84) Benannte Vertragsstaaten:
BE CH DE FR GB IT LI NL

(71) Anmelder: HOECHST AKTIENGESELLSCHAFT
Postfach 80 03 20
D-6230 Frankfurt am Main 80(DE)

(72) Erfinder: Deiringer, Guenther, Dr.
Mozartstrasse 10
D-8269 Burgkirchen(DE)
Erfinder: Muskalla, Winfried
Im Krautacker 11
D-6228 Eltville(DE)

(54) Hochschrumpfbare Folien auf der Basis von Styrol-Butadien-Blockcopolymeren und Verfahren zu ihrer Herstellung.

(57) Es wird eine hochschrumpfbare, vorzugsweise querschrumpfbare Folie beschrieben, die im wesentlichen aus Styrol-Butadien-Blockcopolymeren als Hauptkomponente und einem natürlichen oder synthetischen Harz mit einem Erweichungspunkt von 60 bis 150 °C als der zweiten Komponente gebildet ist. Die Folie enthält vorzugsweise auch noch Polystyrol als weitere Komponente. Ihre Herstellung erfolgt in der Regel durch Extrusion oder Kalandrierung einer Mischung aus den Folienkomponenten. Bei der neuen Folie ist es möglich, durch Strecken besonders hohe Schrumpfwerte zu erzeugen. Sie zeichnet sich ferner durch eine hohe Lichtdurchlässigkeit auch nach dem Schrumpfvorgang aus. Darüber hinaus ist es möglich, die Foie bei einer relativ niedrigen Temperatur zu strecken und die Strecktemperatur innerhalb eines relativ weiten Bereiches zu variieren. Die neuen Folien zeigen auch kein nennenswertes Blocken.

EP 0 251 047 A2

## Hochschrumpfbare Folien auf der Basis von Styrol-Butadien-Blockcopolymeren und Verfahren zu ihrer Herstellung

Die Erfindung betrifft hochschrumpfbare Folien auf der Basis von Styrol-Butadien-Blockcopolymeren, wobei der hohe Schrumpf vorzugsweise in einer Richtung, insbesondere in Querrichtung vorhanden ist. Die Erfindung betrifft ferner ein Verfahren zur Herstellung der Folien.

Für das Umhüllen oder Etikettieren von Flaschen, Konserven, Dosen und dergleichen werden thermoplastische Kunststoffolien eingesetzt, die in Querrichtung einen hohen und in Längsrichtung keinen oder nur einen geringen Schrumpf aufweisen.

In der japanischen Kokai 58/225146-A2 (Chemical Abstract Referat 101:56196q) und in der japanischen Kokai 60/6414-A2 (Chemical Abstract Referat 102:168044r) werden hochquerverstreckte und damit hochquerschrumpfbare Folien auf der Basis von Styrol-Butadien-Blockcopolymeren für die obengenannten Anwendungen, das heißt für Kontaktverpackungszwecke beschrieben. Die aus der ersten Druckschrift bekannten Folien bestehen im wesentlichen aus

1) 100 Teilen von einem Blockcopolymeren aus 60 bis 95 Gew.-% polymerisierten Styrol-Einheiten und 5 bis 40 Gew.-% polymerisierten Butadien-Einheiten mit einem mittleren Molekulargewicht von 40 000 bis 300 000

2) 0 bis 30 Teilen Polystyrol und

3) 0,3 bis 12 Teilen von einem (gummiartigen) Blockcopolymeren aus 20 bis 50 Gew.-% polymerisierten Styrol-Einheiten und 50 bis 80 Gew.-% polymerisierten Butadien-Einheiten.

Die aus der zweiten genannten Druckschrift bekannten Folien bestehen im wesentlichen aus einem Blockcopolymeren aus 65 bis 90 Gew.-% polymerisierten Styrol-Einheiten und 10 bis 35 Gew.-% polymerisierten Butadien-Einheiten oder im wesentlichen aus einer Mischung aus

1) diesem Styrol-Butadien-Blockcopolymeren und

2) Polystyrol.

Die aus den beiden japanischen Druckschriften bekannten schrumpfbaren Folien auf der Basis von Styrol-Butadien-Blockcopolymeren lassen in einigen Eigenschaften hinsichtlich der obengenannten Anwendungen noch zu wünschen übrig. So weisen sie nach dem Schrumpfen nicht jene Transparenz auf, die bei solchen Folien oft gewünscht wird, beispielsweise dann, wenn es auf ein besonders deutliches und klares Aussehen des auf der Folie aufgebrachten Druckes in Form einer Schrift oder eines Bildes ankommt. Sie erfordern ferner eine relativ hohe Schrumpftemperatur und sie weisen nicht jene hohen Schrumpfwerte auf, die bei einigen Anwendungen erwünscht wären. Die bekannten Schrumpffolien auf der Basis von Styrol-Butadien-Blockcopolymeren besitzen auch einen relativ engen Strecktemperaturbereich, was beispielsweise hinsichtlich Verarbeitungssicherheit nachteilig ist. Der Schrumpf der Folien beim Erhitzen resultiert bekanntlich aus der vorangegangenen Streckung der Folie. Es ist in mehrfacher Hinsicht nachteilig, wenn die Temperatur der Folie beim Strecken innerhalb eines relativ engen Bereiches liegen muß.

Die Aufgabe der Erfindung liegt demnach darin, eine Folie auf der Basis von Styrol-Butadien-Blockcopolymeren zur Verfügung zu stellen, welche die hohen Forderungen an solche Folien beim Einsatz zur Kontaktverpackung erfüllen. Die neuen Folien auf der Basis von Styrol-Butadien-Blockcopolymeren sollen insbesondere eine hohe Transparenz und einen hohen Querschrumpf aufweisen und darüber hinaus auch noch die wichtigen Eigenschaften besitzen, daß ihre Streckung zur Erzeugung des hohen Schrumpfes in einem relativ weiten Temperaturbereich vorgenommen werden kann und ihre Schrumpftemperatur relativ niedrig ist.

Die erfindungsgemäßen hochschrumpfbaren Folien auf der Basis von Styrol-Butadien-Blockcopolymeren bestehen im wesentlichen aus

a) 60 bis 98 Gew.-%, vorzugsweise 75 bis 92 Gew.-%, von einem Blockcopolymeren aus 60 bis 92 Gew.-% polymerisierten Styrol-Einheiten und 8 bis 40 Gew.-% polymerisierten Butadien-Einheiten mit einer mittleren Molmasse von 50 000 bis 1 000 000 und einem Schmelzindex von 4 g/10 min bis 25 g/10 min bei 200 °C und 5,0 kp Belastung,

b) 2 bis 40 Gew.-%, vorzugsweise 5 bis 20 Gew.-%, von einem natürlichen oder synthetischen Harz mit einem Erweichungspunkt von 60 bis 150 °C und

c) 0 bis 35 Gew.-%, vorzugsweise 3 bis 20 Gew.-%, Polystyrol mit einem Schmelzindex von 0,5 g/10 min bis 30 g/10 min bei 200 °C und 5,0 kp Belastung, Gewichtsprozente von a), b) und c) jeweils bezogen auf das Gewicht der Folie.

Die Komponente a) der erfindungsgemäßen Folie ist ein Blockcopolymeres aus 60 bis 92 Gew.-%, vorzugsweise 70 bis 85 Gew.-%, Styrol und 8 bis 40 Gew.-%, vorzugsweise 15 bis 30 Gew.-%, Butadien (Gewichtsprozente bezogen auf das Blockcopolymere). Es soll eine mittlere Molmasse von 50 000 bis 1 000 000, vorzugsweise 15 000 bis 500 000 besitzen und einen Schmelzindex (nach DIN 53 735) von 4 g/10 min bis 25 g/10 min, vorzugsweise 8 g/10 min bis 20 g/10 min, bei 200 °C und 5,0 kp Belastung.

Unter Styrol werden im Rahmen der Erfindung nicht nur Styrol selbst (das ist Vinylbenzoyl), sondern auch Styrolderivate, wie die Seitenketten-alkylierten Styrole, zum Beispiel α-Methylstyrol, und die kernsubstituierten Styrole, zum Beispiel Vinyltoluol und Ethylvinylbenzol, verstanden, wobei Styrol (Vinylbenzol) bevorzugt ist. Ebenso werden unter Butadien nicht nur Butadien selbst, sondern auch Butadienderivate wie Isopren und 2,3-Dimethylbutadien verstanden, wobei Butadien bevorzugt ist.

Die erfindungsgemäß einzusetzenden Styrol-Butadien-Blockcopolymeren (SB-Blockcopolymeren) sind im Handel unter dem Begriff polymodalverzweigte SB-Blockcopolymere (gekoppelte Blöcke) mit (im Elektronenmikroskop sichtbarer) lamellenartiger Struktur bekannt und erhältlich. Ihre Herstellung ist beispielsweise in den US-Patentschriften 4 086 298, 4 167 545 und 4 418 180 ausführlich beschrieben. Gemäß Erfindung sind alle diese SB-Blockcopolymeren geeignet, wenn sie die oben angegebenen speziellen Merkmale aufweisen.

Die Komponente b) der erfindungsgemäßen Folien ist ein natürliches oder synthetisches Harz mit einem Erweichungspunkt (nach DIN 1995-U4) von 60 bis 150 °C, vorzugsweise 80 bis 130 °C. Die erfindungsgemäß einzusetzenden Harze sind im Handel erhältlich. In DIN 55 958 ist der Begriff "Harz" erläutert und es werden die einzelnen Gruppen der natürlichen und synthetischen Harze näher beschrieben. Diese Harze sind ferner in Ullmanns Enzyklopädie der technischen Chemie, 4. Auflage, Band 12, S. 525 bis 555, ausführliche beschrieben.

Es hat sich herausgestellt, daß jene natürlichen oder synthetischen Harze mit dem genannten Erweichungspunkt bevorzugt sind, die zur Gruppe der Petroleumharze, Terpenharze und Kolophoniumharze gehören. Die Petroleumharze oder Erdölharze (die zur Familie der Kohlenwasserstoffharze gehören) werden durch Polymerisation von petrochemischen, ungesättigten aliphatischen, cycloaliphatischen oder vinylgruppenhaltigen aromatischen Verbindungen hergestellt. Bevorzugte Vertreter solcher Verbindungen sind Buten, Butadien, 1-Methyl-butadien (Piperylen), 2-Methyl-butadien (Isopren), Penten, Cyclopentadien, Dicyclopentadien, Alkylbenzole, Styrol, Methylstyrol, Vinyltoluol, Naphthalin, Inden und Methylinden. Die Terpenharze (die ebenfalls zur Familie der Kohlenwasserstoffharze gehören) werden aus ungesättigten Bestandteilen von Terpentin, einem Nebenprodukt der Kolophonium-Herstellung, gewonnen. Dabei wird in der Regel von relativ reinen Fraktionen von Terpenen ausgegangen. Die natürlichen Terpenharze stellen demnach Polymerisate von Terpenen dar, vorzugsweise von α-Pinen, ß-Pinen, Dipenten, Limonen, Myrcen, Bornylen, Kamphen und ähnlichen Terpenen. Terpenharze werden in neuerer Zeit auch häufig aus Nebenprodukten gewonnen (das sind höhere, ungesättigte Kohlenwasserstoffe), die beim thermischen oder katalytischen Cracken von Naphtha-und Gasölen auf Ethylen und Propylen entstehen. Dazu werden diese Nebenprodukte durch verschiedene nachfolgende chemische Prozesse wie Dimerisieren, Polymerisieren mittels Friedel-Crafts-Katalysatoren und anschließender Hydrierung in synthetische Terpenharze übergeführt. Kolophonium ist ein natürliches Harz, das aus dem Rohbalsam der Koniferen (Balsamharz), dem Extrakt der Koniferenstubben (Wurzelharz) oder aus Tallöl (Tallharz) gewonnen wird und im wesentlichen aus Abientinsäure und/oder deren Isomeren besteht. Es kann sich auch um modifiziertes Kolophonium handeln, das durch Polymerisieren, Hydrieren, Dehydrieren, Oxidieren, Decarboxylieren, Verseifen, Verestern, Isomerisieren oder Disproportionieren von Kolophonium erhalten wird. So ist beispielsweise das Ziel der Hydrierung die Herabsetzung der Ungesättigtheit der Harzsäuren, um das behandelte Harz heller in der Farbe und stabiler gegen Oxidation an der Luft und den Einfluß von Licht zu machen.

Gemäß Erfindung sind natürliche Harze, synthetische Harze oder Mischungen davon, vorzugsweise Harze aus der Gruppe der Petroleumharze, Terpenharze und Kolophonium geeignet, wenn sie den oben angegebenen charakteristischen Erwei chungspunkt aufweisen, es versteht sich von selbst, daß bevorzugt solche Harze eingesetzt werden (gegebenenfalls nach einem Vorversuch), die mit den Styrol-Butadien-Blockcopolymeren gemäß Komponente a) und mit den Styrolpolymeren gemäß Komponente c) verträglich sind, die relativ stabil sind gegenüber Luftoxidation und Licht (UV-Licht) und die sich bei der Herstellungstemperatur der erfindungsgemäßen Folie, das ist eine Temperatur im Bereich von 150 bis 230 °C, nicht zersetzen oder auch nur verfärben.

Die Komponente c) der erfindungsgemäßen Folie ist ein Polystyrol mit einem Schmelzindex (nach DIN 53 735) von 0,5 g/10 min bis 30 g/10 min, vorzugsweise 2 g/10 min bis 25 g/10 min bei 200 °C und 5,0 kp Belastung. Es können alle die zur Folienherstellung gebräuchlichen Polystyrole eingesetzt werden, sofern sie den angegebenen Schmelzindexwert aufweisen.

0 251 047

Die erfindungsgemäßen Folien können neben der Komponenten a), b) und gegebenenfalls c) auch noch Hilfsmittel enthalten, wie sie bei der Herstellung von Folien aus Styrolpolymeren und/oder Styrol-Butadien-Copolymeren oft eingesetzt werden. Solche Hilfsmittel sind vor allem Stabilisatoren, vorzugsweise solche gegen UV-Licht, und Gleitmittel.

Geeignete Stabilisatoren sind vorzugsweise solche aus der Gruppe der Alkylphenole wie p-tert.-Butylphenol, aus der Gruppe der sterisch gehinderten aromatischen Amine wie o-tert.-Butylanilin und aus der Gruppe der Benztriazole wie Benztriazol selbst. Die Menge an Stabilisator liegt im Bereich von 0,05 bis 2 Gew.-%, vorzugsweise 0,1 bis 1,5 Gew.-%, Gewichtsprozente bezogen auf das Gewicht der Folie.

Geeignete Gleitmittel sind vorzugsweise solche aus der Gruppe der Polyethylen-Wachse, solche aus der Gruppe der Fettsäuren wie Stearinsäure und Ölsäure, und solche aus der Gruppe der Fettsäureester wie Glycerinmonooleat. Die Menge an Gleitmittel liegt ebenfalls im Bereich von 0,05 bis 2 Gew.-%, vorzugseise 0,1 bis 1,5 Gew.-%, Gewichtsprozente bezogen auf das Gewicht der Folie.

Die Herstellung der erfindungsgemäßen Folien auf der Basis von Styrol-Butadien-Blockcopolymeren erfolgt in der Regel dadurch, daß aus den die fertige Folie bildenden Komponenten eine Mischung bereitet wird, und diese Mischung auf einem Kalander zur Herstellung thermoplastischer Folien oder auf einem Extruder mit Breitschlitzdüse zu einer Folie kalandriert bzw. extrudiert wird und die Folie unter hohen Streckverhältnissen gestreckt wird. Die erfindungsgemäßen Folien werden zweckmäßigerweise durch Extrusion hergestellt.

Das bevorzugte Verfahren zur Herstellung der erfindungsgemäßen Folien ist demnach dadurch gekennzeichnet, daß aus den Komponenten der (fertigen) Folie eine Mischung bereitet wird, die Mischung in einem Extruder mit Breitschlitzdüse bei einer Temperatur von 150 bis 230 °C zu einer Folie extrudiert wird, die extrudierte Folie zur Verfestigung abgekühlt wird und diese Folie bei einer Temperatur von 80 bis 120 °C unter einem hohen Streckverhältnis gestreckt (orientiert), vorzugsweise quergestreckt wird.

Zunächst werden also die Komponenten, aus denen die fertige Folie besteht, innig gemischt, beispielsweise in einem zur Bereitung von Formmassen (Blends) auf der Basis von thermoplastischen Kunststoffen üblichen Mischer. Die Mischung wird dann, wie beim üblichen Extrusionsverfahren zur Herstellung von Folien aus thermoplastischen Formmassen, als solche oder zweckmäßigerweise in Form eines Granulates in einem Breitschlitzextruder bei einer Temperatur von 150 bis 230 °C, vorzugsweise 180 bis 210 °C, unter Komprimierung geschmolzen und die Schmelze durch die Breitschlitzdüse zu einer Folie ausgepreßt. Die ausgepreßte Folie wird auf einer oder mehreren Walzen, die durch Kühlung auf etwa 20 bis 70 °C gehalten werden, abgekühlt und verfestigt. Die so erhaltene Folie wird dann bei einer Temperatur von 80 bis 120 °C, vorzugsweise 85 bis 100 °C, unter Einhaltung eines hohen Streckverhältnisses, vorzugsweise nur in der Querrichtung (das heißt quer zur Laufrichtung der Folie bei ihrer Herstellung) gestreckt. Das Streckverhältnis liegt im Bereich von 1 : 3 bis 1 : 7, vorzugsweise 1 : 4 bis 1 : 6.

Das Strecken der Folie wird ebenso wie die Extrusion auf den hierfür üblichen Einrichtungen zum Strecken von thermoplastischen Kunststoffolien durchgeführt. So wird man das Querstrecken, das erfindungsgemäß bevorzugt ist, mit Hilfe des üblichen Breitstreckrahmens durchführen. Die gestreckte Folie läuft in der Regel durch eine Walzenauslaufstrecke, in der sie abgekühlt und anschließend aufgewickelt wird.

Aufgrund der erfindungsgemäßen Kombination der Komponente a) mit der speziellen Komponente b) und gegebenenfalls mit der Komponente c) ist es möglich, durch Strecken besonders hohe Schrumpfwerte zu erzeugen. Die erfindungsgemäßen Folien haben nach einem 5 Minuten langen Erwärmen in einem Wasserbad von 75 bis 85 °C einen Querschrumpf von etwa 20 bis 60 % und in einem Wasserbad von 95 °C einen Querschrumpf von 50 bis 80 %, vorzugsweise 60 bis 75 % (gemessen nach DIN 53 377). Neben dem besonders hohen Schrumpfwert in Querrichtung (in Längsrichtung liegt kein nennenswerter Schrumpf vor), der schon bei niedrigen Temperaturen erreicht wird, zeichnen sich die erfindungsgemäßen Folien durch eine hohe Lichtdurchlässigkeit aus (die nach dem Strecken vorliegende klare bis glasklare Folie erfährt also durch den Schrumpfvorgang keine nennenswerte Trübung). Durch den Einsatz der Harze gemäß Komponente b) ist es möglich, eine Folie auf der Basis von Styrol-Butadien-Blockcopolymeren bei relativ niedriger Temperatur zu strecken und somit bei einer gegebenen Schrumpftemperatur höhere Schrumpfwerte zu erzeugen. Auch wird der Temperaturbereich, in dem gestreckt werden kann, deutlich erweitert, was zu der eingangs erwähnten und angestrebten Verarbeitungssicherheit führt. Die erfindungsgemäßen Folien zeigen als weiteren wertvollen Vorteil kein nennenswertes Blocken. Die Dicke der erfindungsgemäßen Folien liegt im Bereich von 0,01 bis 0,5 mm, vorzugsweise 0,03 bis 0,1 mm.

Die Erfindung wird nun an Beispielen noch näher erläutert.

4

## Beispiel 1

Es wurde eine erfindungsgemäße querschrumpfbare Folie, bestehend aus

a) 90 Gew.-% von einem polymodalverzweigten Styrol-Butadien-Blockcopolymeren aus 74 Gew.-% Styrol und 26 Gew.-% Butadien mit einem Schmelzindex von 13 g/10 min bei 200 °C und 5,0 kp Belastung und einer mittleren Molmasse von etwa 200 000, und

b) 10 Gew.-% von einem farblosen hydrierten Terpenharz mit einem Erweichungspunkt von 125 °C hergestellt.

Dazu wurden 9 kg und 1 kg der Komponenten a) bzw. b) in einem in der Kunststoffverarbeitung üblichen Schnellmischer vermischt. Aus der Mischung wurde ein Granulat bereitet, indem die Mischung in einem Zweischnecken-Extruder bei einer Massetemperatur von 180 bis 190 °C aufgeschmolzen und als Strang extrudiert und der Strang zu Granulat zerschnitten wurde. Das getrocknete Granulat wurde mittels eines Extruders mit Breitschlitzdüse und Walzenstuhl bei einer Massetemperatur von 200 bis 210 °C zu einer Folie extrudiert, die auf dem Walzenstuhl, dessen gekühlte Walzen eine Temperatur von etwa 40 °C hatten, verfestigt und abgekühlt wurde.

Die extrudierte Folie mit einer Dicke von 200 μm wurde mittels eines zur Querstreckung von thermoplastischen Kunststoffolien üblichen Querstreckrahmens bei einer Temperatur von 90 °C im Verhältnis von 1 : 4 quergestreckt und anschließend abgekühlt.

Von der quergestreckten Folie mit einer Dicke von 50 μm wurde der Querschrumpf durch Einbringen von Folienproben in ein Wasserbad von 75 °C, 85 °C und 95 °C und Ausmessen des Schrumpfes der geschrumpften Folie ermittelt.

## Beispiel 2

Beispiel 1 wurde wiederholt mit dem Unterschied, daß die Temperatur der Folie beim Querstrecken auf 95 °C gehalten wurde.

## Beispiel 3

Beispiel 1 wurde wiederholt mit dem Unterschied, daß die Temperatur der Folie beim Querstrecken auf 95 °C gehalten und ein Querstreckverhältnis von 1 : 6 eingehalten wurde.

## Beispiel 4

Beispiel 1 wurde wiederholt mit dem Unterschied, daß die Temperatur der Folie beim Querstrecken auf 100 °C gehalten und ein Querstreckverhältnis von 1 : 5 eingehalten wurde.

## Beispiel 5

Es wurde eine erfindungsgemäße querschrumpfbare Folie, bestehend aus

a) 80 Gew.-% von einem polymodal verzweigten Styrol-Butadien-Blockcopolymeren aus 82 Gew.-% Styrol und 18 Gew.-% Butadien mit einem Schmelzindex von 13 g/10 min bei 200 °C und 5,0 kp Belastung und einer mittleren Molmasse von etwa 200 000,

b) 5 Gew.-% vom Terpenharz des Beispiels 1 und

c) 15 Gew.-% von einem Polystyrol mit einem Schmelzindex von 9,0 g/10 min bei 200 °C und 5,0 kp Belastung hergestellt.

Die Herstellung der Folie erfolgte analog Beispiel 1, mit dem Unterschied, daß die Temperatur der Folie beim Querstrecken auf 95 °C gehalten wurde.

Beispiel 6

Es wurde eine erfindungsgemäße querschrumpfbare Folie, bestehend aus

a) 80 Gew.-% vom Styrol-Butadien-Blockcopolymeren des Beispiels 1

b) 10 Gew.-% vom Terpenharz des Beispiels 1 und

c) 10 Gew.-% von einem Polystyrol mit einem Schmelzindex von 1,5 g/10 min bei 200 °C und 5,0 kp Belastung hergestellt.

Die Herstellung der Folie erfolgte analog Beispiel 1, mit dem Unterschied, daß die Temperatur der Folie beim Querstrecken auf 95 °C gehalten wurde.

Beispiel 7

Es wurde eine erfindungsgemäße querschrumpfbare Folie, bestehend aus

a) 80 Gew.-% vom Styrol-Butadien-Blockcopolymeren des Beispiels 1,

b) 15 Gew.-% von einem Petroleumharz in Form eines hydrierten Polycyclopentadiens mit einem Erweichungspunkt von 80 °C und

c) 5 Gew.-% von einem Polystyrol mit einem Schmelzindex von 24 g/10 min bei 200 °C und 5,0 kp Belastung hergestellt.

Die Herstellung der Folie erfolgte analog Beispiel 1, mit dem Unterschied, daß die Temperatur der Folie beim Querstrecken auf 83 °C gehalten wurde.

Beispiel 8

Es wurde eine erfindungsgemäße querschrumpfbare Folie, bestehend aus

a) 75 Gew.-% vom Styrol-Butadien-Blockcopolymeren des Beispiels 1,

b) 20 Gew.-% von einem Petroleumharz in Form eines Styrolharzes mit einem Erweichungspunkt von 120 °C und

c) 5 Gew.-% vom Polystyrol des Beispiels 5 hergestellt.

Die Herstellung der Folie erfolgte analog Beispiel 1, mit dem Unterschied, daß die Temperatur der Folie beim Querstrecken auf 85 °C gehalten wurde.

Vergleichsbeispiel 1

Es wurde eine schrumpfbare Folie aus einem polymodal verzweigten Styrol-Butadien-Blockcopolymeren allein hergestellt, und zwar aus dem Styrol-Butadien-Blockcopolymeren des Beispiels 1.

Die Herstellung erfolgte analog Beispiel 1, wobei die Temperatur der Folie beim Querstrecken auf 100 °C gehalten wurde. Diese im Vergleich zu Beispiel 1 beträchtlich höhere Querstrecktemperatur war erforderlich, weil bei einer Strecktemperatur von unter 100 °C eine Folie resultierte, die Löcher, Einrisse und/oder Trübung (wegen Kaltverstreckung aufwies.

Vergleichsbeispiel 2

Vergleichsbeispiel 1 wurde wiederholt, mit dem Unterschied, daß ein Querstreckverhältnis von 1 : 6 eingehalten wurde.

Vergleichsbeispiel 3

Es wurde eine querschrumpfbare Folie aus einem polymodalverzweigten Styrol-Butadien-Blockcopolymeren und Polystyrol hergestellt, und zwar aus

1) 90 Gew.-% von dem Styrol-Butadien-Blockcopolymeren des Beispiels 1 und

2) 10 Gew.-% von dem Polystyrol des Beispiels 6.

Die Herstellung der Folie erfolgte wie im Vergleichsbeispiel 1

Vergleichsbeispiel 4

Es wurde eine querschrumpfbare Folie wie im Vergleichsbeispiel 3 hergestellt, und zwar aus
1) 70 Gew.-% von dem Styrol-Butadien-Blockcopolymeren des Beispiels 1 und
2) 30 Gew.-% von dem Polystyrol des Beispiels 6.

Die Herstellung der Folie erfolgte wie im Vergleichsbeispiel 1, mit dem Unterschied, daß die Temperatur der Folie beim Querstrecken auf 105 °C gehalten wurde.

Der Schmelzindex wurde nach DIN 53 735 und der Erweichungspunkt nach DIN 1995-U4 gemessen.

In der nachstehenden Tabelle sind die Querstrecktemperatur, das Querstreckverhältnis und die Querschrumpfwerte der Folien der Beispiele und Vergleichsbeispiele zusammengefaßt.

In den Beispielen 1 und 5 bis 8 und in den Vergleichsbeispielen 1 bis 4 ist die Querstrecktemperatur jeweils die niedrigstmögliche Temperatur, bei der die Folie gestreckt werden kann, ohne daß Löcher, Einrisse und/oder Trübung der Folie auftreten. Bei den Folien der erfindungsgemäßen Beispiele liegt die niedrigstmögliche Strecktemperatur beträchtlich unter der der Vergleichsbeispiele (vergleiche Beispiele 1 und 5 bis 8 und die Vergleichsbeispiele 1 bis 4 der nachstehenden Tabelle). Die Beispiele 2, 3 und 4 sollen zeigen, daß Folien der Erfindung einen relativ weiten Strecktemperatur-Bereich erlauben.

Die Querschrumpfwerte der Folien wurden in Anlehnung an die DIN 53 377 gemessen, durch Einbringen einer Folienprobe 5 Minuten lang in ein Wasserbad von 75 °C, 85 °C und 95 °C und anschließendes Ausmessen des Schrumpfes.

Wie aus der nachstehenden Tabelle ersichtlich ist, weisen die erfindungsgemäßen Folien einen sehr hohen Querschrumpf bei 95 °C auf. Sie besitzen ferner, als weiteren großen Vorteil, auch schon bei 75 bis 85 °C, das heißt bei einer relativ niedrigen Temperatur, hohe Schrumpfwerte. Die erfindungsgemäßen Folien weisen also durch ihren relativ hohen Schrumpf bei 75 bis 85 °C (Vorschrumpf) und dem sehr hohen Schrumpf bei 95 °C (Endschrumpf) eine hervorragende Schrumpfcharakteristik auf. Aufgrund des weitgehenden Schrumpfens der erfindungsgemäßen Folien schon bei einer relativ niedrigen Temperatur wird in all den Fällen, in denen dieser Schrumpf bereits ausreicht, eine geringe thermische Belastung des zu umhüllenden Gegenstandes und eine hohe Maschinentaktzeit erreicht. Aus der Tabelle geht auch hervor, daß die Streckung der neuen Folien auf der Basis von Styrol-Butadien-Blockcopolymeren in einem relativ weiten Temperaturbereich (vergleiche Beispiele 2 bis 4) und darüber hinaus bei relativ niedriger Temperatur vorgenommen werden kann, woraus ein hoher verfahrenstechnischer Vorteil und eine hohe Verarbeitungssicherheit resultieren.

Von den gestreckten Folien der Beispiele und Vergleichsbeispiele wurden auch die Lichtdurchlässigkeit und die Trübung nach ASTM-D-1003 gemessen. Die gestreckten erfindungsgemäßen Folien besaßen eine Lichtdurchlässigkeit von über 90 % und eine Trübung von weniger als 10 %, während die gestreckten Folien der Vergleichsbeispiele eine Lichtdurchlässigkeit von nur 80 % und eine Trübung von mehr als 20 % besaßen.

Mit den erfindungsgemäßen Folien stehen also Folien auf der Basis von Styrol-Butadien-Blockcopolymeren zur Verfügung, die den vielfachen Forderungen beim Einsatz zur Kontaktverpackung entsprechen.

7

TABELLE

| Bei-spiel Nr. | Querstreck-temperatur ( °C) | Querstreck-verhältnis | Querschrumpfwerte | | |
|---|---|---|---|---|---|
| | | | 75 °C | 85 °C | 95 °C |
| | | | ( % ) | | |
| 1 | 90 | 1 : 4 | 31 | 55 | 73 |
| 2 | 95 | 1 : 4 | 25 | 46 | 68 |
| 3 | 95 | 1 : 6 | 24 | 47 | 69 |
| 4 | 100 | 1 : 5 | 12 | 35 | 64 |
| 5 | 95 | 1 : 4 | 20 | 42 | 68 |
| 6 | 95 | 1 : 4 | 20 | 40 | 64 |
| 7 | 83 | 1 : 4 | 40 | 60 | 75 |
| 8 | 85 | 1 : 4 | 34 | 55 | 74 |

| Ver-gleichs-beispiel-Nr. | | | | | |
|---|---|---|---|---|---|
| 1 | 100 | 1 : 4 | 14 | 33 | 60 |
| 2 | 100 | 1 : 6 | 17 | 35 | 63 |
| 3 | 100 | 1 : 4 | 8 | 26 | 52 |
| 4 | 105 | 1 : 4 | 3 | 16 | 45 |

**Ansprüche**

1. Hochschrumpfbare Folie auf der Basis von Styrol-Butadien-Blockcopolymeren, bestehend im wesentlichen auf

a) 60 bis 98 Gew.-% von einem Blockcopolymeren aus 60 bis 92 Gew.-% polymerisierten Styrol-Einheiten und 8 bis 40 Gew.-% polymerisierten Butadien-Einheiten mit einer mittleren Molmasse von 50 000 bis 1 000 000 und einem Schmelzindex von 4 g/10 min bis 25 g/10 min bei 200 °C und 5,0 kp Belastung,

b) 2 bis 40 Gew.-% von einem natürlichen oder synthetischen Harz mit einem Erweichungspunkt von 60 bis 150 °C

und

c) 0 bis 35 Gew.-% Polystyrol mit einem Schmelzindex von 0,5 g/10 min bis 30 g/10 min bei 200 °C und 5,0 kp Belastung, Gewichtsprozente von a), b) und c) jeweils bezogen auf das Gewicht der Folie.

2. Folie nach Anspruch 1, dadurch gekennzeichnet, daß sie die Komponente a) in einer Menge von 75 bis 92 Gew.-%, die Komponente b) in einer Menge von 5 bis 20 Gew.-% und die Komponente c) in einer Menge von 3 bis 20 Gew.-% enthält.

3. Folie nach Anspruch 1 oder 2, dadurch gekennzeichnet, daß das Blockcopolymere aus 70 bis 85 Gew.-% polymerisierten Styrol-Einheiten und 15 bis 30 Gew.-% polymerisierten Butadien-Einheiten besteht.

4. Folie nach einem oder mehreren der Ansprüche 1 bis 3, dadurch gekennzeichnet, daß das Blockcopolymere ein mittleres Molekulargewicht von 150 000 bis 500 000 und einen Schmelzindex von 8 g/10 min bis 20 g/10 min hat.

5. Folie nach einem oder mehreren der Ansprüche 1 bis 4, dadurch gekennzeichnet, daß das Herz einen Erweichungspunkt von 80 bis 130 °C hat.

6. Folie nach einem oder mehreren der Ansprüche 1 bis 5, dadurch gekennzeichnet, daß das Harz ein Petroleumharz, Terpenharz oder Kolophonium oder eine Mischung solcher Harze ist.

7. Folie nach einem oder mehreren der Ansprüche 1 bis 6, dadurch gekennzeichnet, daß das Polystyrol einen Schmelzindex von 2 g/10 min bis 25 g/10 min hat.

8. Folie nach einem oder mehreren der Ansprüche 1 bis 7, dadurch gekennzeichnet, daß sie nach Erwärmen in einem Wasserbad von 75 bis 85 °C 5 Minuten lang einen Querschrumpf von 20 bis 60 % und bei 95 °C Wasserbad-Temperatur einen Querschrumpf von 50 bis 80 % aufweist.

9. Verfahren zur Herstellung der Folie nach Anspruch 1, dadurch gekennzeichnet, daß aus den Komponenten a) und b) und gegebenenfalls c) eine Mischung bereitet wird, die Mischung in einem Extruder mit Breitschlitzdüse bei einer Temperatur von 150 bis 230 °C zu einer Folie extrudiert wird, die extrudierte Folie zur Verfestigung abgekühlt wird und diese Folie bei einer Temperatur von 80 bis 120 °C unter einem hohen Streckverhältnis gestreckt wird.